# EUROPÄISCHE PATENTSCHRIFT

(11) **EP 1 398 946 B1**
(45) Veröffentlichungstag und Bekanntmachung des Hinweises auf die Patenterteilung: **04.01.2006**
(21) Anmeldenummer: 02020601.7
(22) Anmeldetag: 12.09.2002
(51) Int. Cl.: H04M 9/08

(54) **Kommunikationsendgerät mit Bandbreitenerweiterung und Echokompensation**
Communication terminal apparatus with bandwidth enlargement and echo canceler
Terminal de communication avec expansion de bande passante et annulateur d'écho

(43) Veröffentlichungstag der Anmeldung: 17.03.2004
(73) Patentinhaber: SIEMENS AKTIENGESELLSCHAFT, 80333 München (DE)
(72) Erfinder: Klinke, Stefano Ambrosius, Dr., 40489 Düsseldorf (DE); Lorenz, Frank, 46397 Bocholt (DE)

(56) Entgegenhaltungen:
- EP-A- 0 709 958
- US-A- 5 600 714
- US-A1- 2002 016 698

## Beschreibung

Die Erfindung bezieht sich auf ein Kommunikationsendgerät nach dem Oberbegriff von Anspruch 1 sowie auf ein Verfahren zur artifitiellen Erweiterung einer Bandbreite eines Empfangssignals eines Kommunikationsendgeräts.

Im Stand der Technik ist es beispielsweise aus der GB 2 357 682 A bekannt, ein Kommunikationsendgerät mit einem Signal-Empfangspfad, der eine Bandbreitenerweiterungseinrichtung zur artifiziellen Erweiterung einer Bandbreite eines Empfangssignals des Kommunikationsendgerätes, einen Digital-/Analogwandler und einen Lautsprecher aufweist, und mit einem Signal-Sendepfad, der ein Mikrofon, einen Sendepfad-Tiefpass und einen Analog-/Digitalwandler aufweist. Eine Einführung in den Markt für ein solches Kommunikationsendgerät hat jedoch bisher nicht stattgefunden.

Die vorgesehene Bandbreitenerweiterungseinrichtung hat die Aufgabe, aufgrund eines schmalbandigen Empfangsignals eine Bandbreitenerweiterung für dieses Empfangsignal durchzuführen, und zwar unter Abtastung und Auswertung des Empfangssignals mittels eines geeigneten Algorithmus. Beispielsweise kann das Empfangssignal in einem Frequenzbereich zwischen 300 und 3.400 Hz vorliegen, so dass eine Erweiterung der Bandbreite sowohl zu niedrigen Frequenzen als auch zu hohen Frequenzen durchgeführt werden kann.

Eine Frequenzanalyse des schmalbandigen Empfangssignals führt beispielsweise dazu, dass auf der niederfrequenten Seite des schmalbandigen Empfangssignals Grundwellen hinzugefügt werden, deren Oberwellen in dem schmalbandigen Empfangssignal enthalten sind. In ähnlicher Weise können in dem schmalbandigen Empfangssignal Grundwellen vorhanden sein, deren Oberwellen auf der hochfrequenten Seite des schmalbandigen Empfangsignals ergänzt werden können. Insgesamt ergibt sich ein verbessertes Klangbild eines aufgrund des Empfangssignals, welches hinsichtlich seiner Bandbreite erweitert worden ist, über den Lautsprecher abgestrahlten Schallsignals. Insbesondere wird eine subjektiv wahrgenommene Qualität des Schallsignals, bei dem es sich überwiegend um ein Sprachsignal handelt, verbessert.

Ebenfalls im Stand der Technik bekannt sind sog. Echokompensationseinrichtungen, welche die Aufgabe haben, die über den Lautsprecher abgestrahlten Schallsignale des Signalempfangspfades auf dem Signal-Sendepfad zu unterdrücken. Dies ist erforderlich, um der Tatsache Rechnung zu tragen, dass die von dem Lautsprecher ausgestrahlten Schallsignale über das Mikrofon des Kommunikationsendgerätes und eine Antenne des Kommunikationsendgerätes wieder abgestrahlt werden, so dass ein Gesprächspartner eines Benutzers des Kommunikationsendgerätes seine eigenen Sprachsignale als Echo wahrnimmt.

Die zur Echokompensation benutzten Algorithmen haben die Eigenschaft, das sie nichtlineare Verzerrungen von Empfangssignalen nicht kompensieren können. Eine solche nichtlineare Verzerrung ergibt sich jedoch aus der oben beschriebenen Bandbreitenerweiterung für das Empfangssignal.

Beispielsweise in der US 5,600,714 A wird eine Schaltungsanordnung eines Telefons, das für Konferenzschaltungen geeignet ist, vorgestellt, die einem Zwei-Draht-Telefonsystem vorgeschaltet ist. Sowohl innerhalb eines Empfangs- als auch eines Sendepfades ist eine Echokompensationseinrichtung vorgesehen.

Ausgehend hiervon liegt der Erfindung die Aufgabe zugrunde, ein Kommunikationsendgerät mit einer Bandbreitenerweiterungseinrichtung bereit zu stellen, bei dem auftretende Echos wirksam kompensiert werden können. Auch soll ein Verfahren zur artifitiellen Erweiterung einer Bandbreite eines Empfangssignals eines Kommunikationsendgerätes angegeben werden, bei dem Maßnahmen zur Echokompensation getroffen sind.

Die Aufgabe wird hinsichtlich des Kommunikationsendgerätes gelöst durch ein Kommunikationsendgerät mit einem Signal-Empfangspfad, der eine Bandbreitenerweiterungseinrichtung zur artifiziellen Erweiterung einer Bandbreite eines Empfangssignals des Kommunikationsendgerätes, einen Digital-/Analogwandler und einen Lautsprecher aufweist, und mit einem Signal-Sendepfad, der ein Mikrofon, einen Sendepfad-Tiefpass und einen Analog-/Digitalwandler aufweist, wobei dass zwischen einem Ausgang der Bandbreitenerweiterungseinrichtung und einem Anschlusspunkt des Signal-Sendepfades in bezug auf das Mikrophon jenseits des Analog-/Digitalwandlers eine Echokompensationseinrichtung vorgesehen ist.

Nach der Erfindung ist somit vorgesehen, das Ausgangssignal der Bandbreitenerweiterungseinrichtung der Echokompensationseinrichtung zur Verfügung zu stellen, so dass diese mit Hilfe des ihr zugeordneten Algorithmus eine Subtraktion des erweiterten Empfangssignals von einem Signal auf dem Signal-Sendepfad hervorrufen kann.

Es ist hervorzuheben, dass die nichtlinearen Verzerrungen des Empfangsignals aufgrund der Bandbreitenerweiterung in dem Eingangssignal für die Echokompensationseinrichtung als Signalanteile enthalten sind, so dass die Echokompensationseinrichtung in der bekannten Weise eingesetzt werden kann.

Bei einer Ausführungsform der Erfindung arbeitet die Bandbreitenerweiterungseinrichtung mit einer ersten Abtastrate und die Echokompensationseinrichtung mit einer zweiten Abtastrate und es ist eine Abtastratenumsetzeinrichtung zum Umsetzen eines Ausgangssignals der Bandbreitenerweiterungseinrichtung mit der ersten Abtastrate auf die zweit Abtastrate vorgesehen, deren Ausgang mit einem Eingang der Echokompensationseinrichtung verbunden ist.

Diese Vorgehensweise trägt der Tatsache Rechnung, dass die Bandbreitenerweiterungseinrichtung und die Echokompensationseinrichtung mit verschiedenen Abtastraten arbeiten können, wobei jedoch die Echokompensationseinrichtung ein Eingangssignal erhalten sollte, das hinsichtlich seiner Abtastrate derjenigen Abtastrate entspricht, die von der Echokompensationseinrichtung benutzt wird. In vielen Fällen wird die Abtastrate der Bandbreitenerweiterungseinrichtung höher sein als diejenige, der Echokompensationseinrichtung, so dass die Abtastratenumsetzeinrichtung eine Verminderung der Abtastrate durchzuführen hat.

Die Abtastratenumsetzeinrichtung kann mit einem Umsetz-Tiefpass zusammenwirken, der eine Durchlasscharakteristik hat, die für die zweite Abtastrate für die Echokompensationseinrichtung angepasst ist. Diese Ausführungsform betrifft Fälle, bei denen die erste Abtastrate höher als die zweite Abtastrate ist. In diesem Fall muss vermieden werden, dass im Eingangssignal für die Echokompensationseinrichtung Signalanteile enthalten sind, deren Frequenz aufgrund der zweiten Abtastrate nicht darstellbar ist. Zu diesem Zweck dient der Umsetz-Tiefpass.

Die erste Abtastrate für die Bandbreitenerweiterung kann 16 kHz und die zweit Abtastrate für die Echokompensationseinrichtung kann 8 kHz betragen. Diese Werte sind typische Werte für eine Bandbreitenerweiterungseinrichtung bzw. eine Echokompensationseinrichtung, die jedoch im Stand der Technik bisher noch nicht miteinander kombiniert wurden.

Zur Optimierung der Qualität der Echokompensation kann die Durchlasscharakteristik des Umsetz-Tiefpasses zum Durchlassen von Signalanteilen mindestens gleich hoher Frequenz wie der Sendepfad-Tiefpass ausgelegt sein. Anderenfalls würde der Umsetz-Tiefpass Signalanteile unterdrücken, die dann nicht von der Echokompensationseinrichtung kompensiert werden könnten.

Die obige Aufgabe wird hinsichtlich des Verfahrens gelöst durch ein Verfahren zur artifiziellen Erweiterung einer Bandbreite eines Empfangssignals eines Kommunikationsendgerätes mit einem Signal-Empfangspfad und einem Signal-Sendepfad, mit den aufeinander folgenden Schritten:
a) Abtasten des Empfangssignals im Signal-Empfangspfad,
b) Erweitern der Bandbreite des Empfangssignals mittels eines Bandbreitenerweiterungsalgorithmus aufgrund von in Schritt a) gewonnenen Abtastwerten zum Gewinnen eines erweiterten Empfangssignals,
c) Kompensieren von Echos des erweiterten Empfangssignals für den Signal-Sendepfand mittels eines Echokompensationsalgorithmus unter Abtastung des erweiterten Empfangssignals.

Die Erläuterung der einzelnen Verfahrensschritte findet sich bereits oben anhand der Beschreibung des Kommunikationsendgerätes mit Bandbreitenerweiterungseinrichtung und Echokompensationseinrichtung.

Es ist hervorzuheben, dass das Kommunikationsendgerät mit Bandbreitenerweiterungseinrichtung und Echokompensationseinrichtung grundsätzlich bei jeder Kombination von erster Abtastrate und zweiter Abtastrate arbeiten kann. In der Praxis wird der häufigste Fall derjenige sein, dass die erste Abtastrate höher, beispielsweise das Zweifache der zweiten Abtastrate, als die zweite Abtastrate ist. Wesentlich für die Erfindung ist jedoch, dass das Ausgangssignal der Bandbreitenerweiterungseinrichtung hinsichtlich seiner Abtastrate an die Abtastrate der Echokompensationseinrichtung angepasst wird, wobei auch eine Erhöhung der Abtastrate für das Ausgangssignal der Bandbreitenerweiterungseinrichtung, beispielsweise durch die Interpolation, denkbar ist.

Ausführungsbeispiele der Erfindung werden nachfolgend anhand der Zeichnungen noch näher erläutert. Es zeigen:
- Figur 1: ein Diagramm zur Veranschaulichung eines Frequenzspektrums eines hinsichtlich seiner Bandbreite erweiterten Empfangssignals bei einem Kommunikationsendgerät nach der Erfindung,
- Figur 2: ein Übersichts-Blockschaltbild eines Schaltungsteils des Kommunikationsendgeräts zur Veranschaulichung einer Bandbreitenerweiterung und einer Echokompensation.

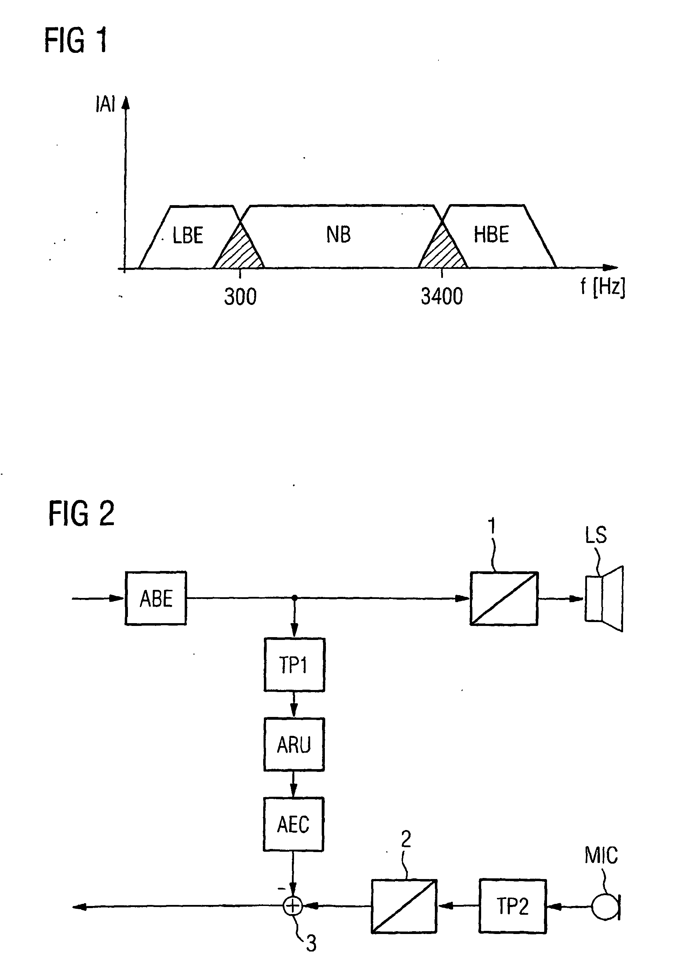

In Figur 1 ist der Betrag einer Amplitude von Signalanteilen eines erweiterten Empfangssignals als Funktion der Frequenz aufgetragen. Ein mittlerer Signalanteil NB stammt von dem Empfangssignal, das ein Kommunikationsendgerät erreicht hat. Im vorliegenden Ausführungsbeispiel reicht der Frequenzbereich des Empfangssignals von etwa 300 Hz bis etwa 3.400 Hz, wobei jedoch sowohl auf der hochfrequenten als auch auf der niederfrequenten Seite des Empfangssignals die Signalamplitude nicht sprunghaft sondern über ein bestimmtes Intervall hin abfällt.

Eine Bandbreitenerweiterungseinrichtung ABE (vgl. Figur 2), die in einem Signal-Empfangs-Pfad des Kommunikationsendgerätes vorgesehen ist, sorgt für eine Erweiterung der ursprünglichen Bandbreite des Empfangssignals, und zwar sowohl auf der hochfrequenten Seite als auch auf der niederfrequenten Seite. Auf der hochfrequenten Seite hinzugefügte Signalanteile HBE überlappen mit dem mittleren Signalanteil NB des ursprünglichen Empfangssignals. Auf diese Weise liegen in einem Frequenzbereich um 3.400 Hz sowohl Signalanteile, die von den ursprünglichen Empfangssignal stammen, als auch Signalanteile, die von der Bandbreitenerweiterungseinrichtung ABE generiert wurden, vor und überlappen sich. Eine solche Überlappung ist als wünschenswert anzusehen, da auf diese Weise ein erweitertes Empfangssignal hinsichtlich seiner akustischen Eigenschaften optimiert wird. Gleiches gilt auch für die niederfrequente Seite des ursprünglichen Empfangssignals, d. h. den mittlern Signalanteil NB. Auf dessen niederfrequenter Seite werden Signalanteile LBE hinzuaddiert, wobei sich eine Überlappung im Bereich um 300 Hz herum zwischen den Signalanteilen LBE und den mittleren Signalanteilen NB ergibt.

Die hinzugefügten Signalanteile LBE, HBE sorgen in den genannten Überlappbereichen für nichtlineare Verzerrungen, deren Auswirkungen im Hinblick auf Echos nicht durch einfaches Filtern zu unterdrücken sind. Die erwähnten Überlappbereiche sind in der Figur 1 zur Veranschaulichung gestrichelt dargestellt.

Der in Figur 2 dargestellte Aufbau eines Schaltungsteils des Kommunikationsendgerätes weist einen Signal-Empfangspfad und einen Signal-Sendepfad auf. Der Signal-Empfangspfad ist charakterisiert durch eine Bandbreitenerweiterungseinrichtung ABE, an deren Eingang das ursprüngliche 8 kHz-Empfangssignal, das das Kommunikationsendgerät erreicht hat, anliegt. Mittels eines geeigneten Algorithmus zur Bandbreitenerweiterung wird mit einer Abtastrate von 16 kHz eine Bandbreitenerweiterung durchgeführt, so dass sich für ein Ausgangssignal der Bandbreitenerweiterungseinrichtung ABE ein Frequenzspektrum ergibt, das demjenigen, das in Figur 1 gezeigt ist, vergleichbar ist.

Das mit einer Abtastrate von 16 kHz vorliegende Ausgangssignal der Bandbreitenerweiterungseinrichtung ABE wird einem Digital-/Analog-Wandler 1 zugeführt, dessen Ausgangssignal über einen Lautsprecher LS in ein Schallsignal umgewandelt wird.

Dass von dem Lautsprecher LS abgestrahlte Schallsignal, das für einen Benutzer des Kommunikationsendgerätes vorgesehen ist, gelangt auch zu einem Mikrofon MIC des Kommunikationsendgerätes, dass im Grunde zur Aufnahme von Sprachsignalen eingesetzt wird, die auf den Benutzer des Kommunikationsendgerätes zurückgehen. Auf diese Weise findet sich das von dem Lautsprecher LS abgestrahlte Schallsignal als Echo in dem von dem Mikrofon MIC aufgenommen Schallsignal.

Das Mikrofon MIC bildet ein erstes Element des Signal-Sendepfades. Sein Ausgangssignal wird einem Sendepfad-Tiefpass TP2 zugeleitet, dessen Flanke an eine Abtastrate eines nachgeschalteten Analog-/Digitalwandlers 2 angepasst ist. Im vorliegenden Ausführungsbeispiel arbeitet der Analog-/Digital-Wandler 2 mit einer Abtastrate von 8 kHz, so dass der Sendepfad-Tiefpass TP2 Signalfrequenzen oberhalb von 4 kHz dämpfen sollte, um der hier einschlägigen Nyquist-Bedingung zu genügen.

Ein Ausgangssignal des Analog-/Digital-Wandlers 2 enthält nunmehr sowohl Signalanteile, die von Sprachsignalen herrühren, die auf den Benutzer des Kommunikationsendgerätes zurückzuführen sind, als auch Signalanteile in Form von Echos, die von dem Lautsprecher LS stammen.

Zur Unterdrückung von Echos sind die nun beschriebenen Komponenten der dargestellten Schaltung von besonderer Bedeutung. Das Ausgangssignal der Bandbreitenerweiterungseinrichtung ABE, dass mit einer ersten Abtastrate von 16 kHz vorliegt, wird einem als Dezimations-Tiefpass ausgebildeten Umsetz-Tiefpass TP1 zugeführt. Ein Ausgangssignal des Umsetz-Tiefpasses TP1 gelangt zu einer Abtastratenumsetzeinrichtung ARU, welche die erste Abtastrate von 16 kHz in eine zweite Abtastrat von 8 kHz umsetzt. Dabei sorgt der Umsetz-Tiefpass TP1 für eine ausreichende Dämpfung von an seinem Eingang anliegenden Signalanteilen mit einer Frequenz von mehr als 4 kHz. Grundsätzlich sollte der Umsetz-Tiefpass Signalanteile mit einer Frequenz passieren lassen, die auch der Sendepfad-Tiefpass TP2 durchlässt. Auf dieser Weise wird sichergestellt, dass Echos, die von dem Sendepfad-Tiefpass TP2 durchgelassen werden, auch mittels einer Echokompensationseinrichtung AEC, die nun beschrieben wird, kompensiert werden können.

Die Echokompensationseinrichtung AEC verwendet einen geeigneten Algorithmus zur Kompensierung von Echos in dem Ausgangssignal des Analog-/Digital-Wandlers 2 und arbeitet mit einer zweiten Abtastrate von 8 kHz. Ein Ausgangssignal der Echokompensationseinrichtung AEC liegt an einem Anschlusspunkt 3 des Signal-Sendepfades an, der auch mit einem Ausgang des Analog-/Digital-Wandlers 2 in Verbindung steht. An dem Anschlusspunkt 3 wird eine Echokompensation vollzogen, und zwar mit Hilfe eines Kompensationssignals, das mittels des Echokompensationsalgorithmus von der Echokompensationseinrichtung AEC generiert wird. Die Abtastrate des Kommunikationssignals entspricht der Abtastrate des Ausgangssignals des Analog-/Digital-Wandlers 2.

## Patentansprüche

1. Kommunikationsendgerät mit einem Signal-Empfangspfad, der eine Bandbreitenerweiterungseinrichtung (AbE)zur artifiziellen Erweiterung einer Bandbreite eines Empfangssignals des Kommunikationsendgerätes, einen Digital-/Analogwandler (1) und einen Lautsprecher (LS) aufweist, und mit einem Signal-Sendepfad, der ein Mikrofon (MIC), einen Sendepfad-Tiefpass (TP2)und einen Analog-/Digitalwandler (2) aufweist,
**dadurch gekennzeichnet,**
**dass** zwischen einem Ausgang der Bandbreitenerweiterungseinrichtung (ABE) und einem Anschlusspunkt (3) des Signal-Sendepfades in bezug auf das Mikrofon (MIC) jenseits des Analog-/Digitalwandlers (2) eine Echokompensationseinrichtung (AEC) vorgesehen ist.

2. Kommunikationsendgerät nach Anspruch 1,
**dadurch gekennzeichnet,**
**dass** die Bandbreitenerweiterungseinrichtung (ABE) mit einer ersten Abtastrate und die Echokompensationseinrichtung (AEC) mit einer zweiten Abtastrate, die von der ersten Abtastrate verschiedenen ist, arbeitet und eine Abtastratenumsetzeinrichtung (ARU) zum Umsetzen eines Ausgangssignals der Bandbreitenerweiterungseinrichtung mit der ersten Abtastrate auf die zweite Abtastrate vorgesehen ist, deren Ausgang mit einem Eingang der Echokompensationseinrichtung (AEC) verbunden ist.

3. Kommunikationsendgerät nach Anspruch 2,
**dadurch gekennzeichnet,**
**dass** die Abtastratenumsetzeinrichtung (ARU) mit einem Umsetz-Tiefpass (TP1) zusammenwirkt, der eine Durchlasscharakteristik hat, die für die zweite Abtastrate für die Echokompensationseinrichtung (AEC) angepasst ist, wobei die erste Abtastrate höher als die zweite Abtastrate ist.

4. Kommunikationsendgerät nach einem der Ansprüche 2 oder 3,
**dadurch gekennzeichnet,**
**dass** die erste Abtastrate für die Bandbreitenerweiterungseinrichtung (ABE) 16 kHz und die zweite Abtastrate für die Echokompensationseinrichtung (AEC) 8 kHz beträgt.

5. Kommunikationsendgerät nach einem der Ansprüche 3 oder 4,
**dadurch gekennzeichnet,**
**dass** die Durchlasscharakteristik des Umsetz-Tiefpasses (TP1) zum Durchlassen von Signalanteilen mindestens gleich hoher Frequenz wie der Sendepfad-Tiefpass (TP2) ausgelegt ist.

6. Verfahren zur artifiziellen Erweiterung einer Bandbreite eines Empfangssignals eines Kommunikationsendgerätes mit einem Signal-Empfangspfad und einem Signal-Sendepfad, mit den aufeinander folgenden Schritten:
a) Abtasten des Empfangssignals im Signal-Empfangspfad,
b) Erweitern der Bandbreite des Empfangssignals mittels eines Bandbreitenerweiterungsalgorithmus aufgrund von in Schritt a) gewonnenen Abtastwerten zum Gewinnen eines erweiterten Empfangssignals,
**gekennzeichnet durch** den Schritt
c) Kompensieren von Echos des erweiterten Empfangssignals für den Signal-Sendepfand mittels eines Echokompensationsalgorithmus unter Abtastung des erweiterten Empfangssignals.

7. Verfahren nach Anspruch 6, bei dem die Bandbreitenerweiterung in Schritt b) mit einer ersten Abtastfrequenz und das Abtasten in Schritt c) mit einer zweiten Abtastfrequenz, die von der ersten Abtastfrequenz abweicht, durchgeführt wird und ein aufgrund von Schritt b) gewonnenes erweitertes Empfangssignal auf die zweite Abtastfrequenz umgesetzt wird, bevor Schritt c) durchgeführt wird.

## Claims

1. Communication terminal having a signal reception path which has a bandwidth widening device (ABE) for artificially widening the bandwidth of a received signal in the communication terminal, a digital/analogue converter (1) and a loudspeaker (LS), and having a signal transmission path, which has a microphone (MIC), a transmission path low-pass filter (TP2) and an analogue/digital converter (2),
**characterized in that**
an echo compensation device (AEC) is provided between one output of the bandwidth widening device (ABE) and a connecting point (3) of the signal transmission path, beyond the analogue/digital converter (2) with respect to the microphone (MIC).

2. Communication terminal according to Claim 1,
**characterized in that**
the bandwidth widening device (ABE) operates at a first sampling rate, and the echo compensation device (ACE) operates at a second sampling rate which is not the same as the first sampling rate, and a sampling rate conversion device (ARU) is provided for conversion of an output signal from the bandwidth widening device at the first sampling rate to the second sampling rate, and the output of said sampling rate conversion device connected to an input of the echo compensation device (AEC).

3. Communication terminal according to Claim 2,
**characterized in that**
the sampling rate conversion device (ARU) interacts with a conversion low-pass filter (TP1) which has a pass characteristic which is matched to the second sampling rate for the echo compensation device (AEC), with the first sampling rate being higher than the second sampling rate.

4. Communication terminal according to one of Claims 2 or 3,
**characterized in that**
the first sampling rate for the bandwidth widening device (ABE) is 16 kHz, and the second sampling rate for the echo compensation device (ACE) is 8 kHz.

5. Communication terminal according to one of Claims 3 or 4,
**characterized in that**
the pass characteristic of the conversion low-pass filter (TP1) is designed to pass signal components whose frequency is at least as high as that of the transmission path low-pass filter (TP2).

6. Method for artificially widening the bandwidth of a received signal in a communication terminal having a signal reception path and a signal transmission path, having the following successive steps:
a) sampling of the received signal in the signal reception path,
b) widening of the bandwidth of the received signal by means of a bandwidth widening algorithm on the basis of sample values obtained in step a), in order to obtain a widened received signal,
**characterized by** the step
c) compensation for the echo on the widened received signal for the signal transmission path by means of an echo compensation algorithm, with the widened received signal being sampled.

7. Method according to Claim 6, in which the bandwidth widening in step b) is carried out at a first sampling frequency, and the sampling in step c) is carried out at a second sampling frequency, which is not the same as the first sampling frequency, and a widened received signal which has been obtained on the basis of step b) is converted to the second sampling frequency before step c) is carried out.

## Revendications

1. Terminal de communication ayant un trajet de réception du signal qui comporte un dispositif (AbE) d'agrandissement de la largeur de bande pour agrandir artificiellement une largeur de bande d'un signal de réception du terminal de communication, un convertisseur (1) numérique/analogique et un haut-parleur (LS), et comprenant un trajet d'émission du signal qui comporte un microphone (MIC), un passe-bas (TP2) de trajet d'émission et un convertisseur (2) analogique/numérique,
**caractérisé**
**en ce qu'**il est prévu, entre une sortie du dispositif (ABE) d'agrandissement de la largeur de bande et un point (3) de connexion du trajet d'émission du signal se trouvant par rapport au microphone (MIC) au-delà du convertisseur (2) analogique/numérique, un dispositif (AEC) d'annulation d'écho.

2. Terminal de communication suivant la revendication 1,
**caractérisé**
**en ce que** le dispositif (ABE) d'agrandissement de la largeur de bande opère à un premier taux d'échantillonnage et le dispositif (AEC) d'annulation de l'écho à un deuxième taux d'échantillonnage qui est différent du premier taux d'échantillonnage, et il est prévu un dispositif (ARU) de changement du taux d'échantillonnage pour faire passer un signal de sortie du dispositif d'agrandissement de la largeur de bande ayant le premier taux d'échantillonnage au deuxième taux d'échantillonnage dont la sortie est reliée à une entrée du dispositif (AEC) d'annulation d'écho.

3. Terminal de communication suivant la revendication 2,
**caractérisé**
**en ce que** le dispositif (ARU) de changement du taux d'échantillonnage coopère avec un passe-bas (TP1) de conversion qui a une caractéristique de transfert qui est adaptée au deuxième taux d'échantillonnage pour le dispositif (AEC) d'annulation d'écho, le premier taux d'échantillonnage étant plus grand que le deuxième taux d'échantillonnage.

4. Terminal de communication suivant l'une des revendications 2 ou 3,
**caractérisé**
**en ce que** le premier taux d'échantillonnage pour le dispositif (ABE) d'agrandissement de la largeur de bande est de 16 kHz et le deuxième taux d'échantillonnage pour le dispositif (AEC) d'annulation de l'écho est de 8 kHz.

5. Terminal de communication suivant l'une des revendications 3 ou 4,
**caractérisé**
**en ce que** la caractéristique de transfert du passe-bas (TP1) de conversion pour le transfert de composantes du signal est conçue pour au moins une fréquence aussi haute que celle du passe-bas (TP2) du trajet d'émission.

6. Procédé d'agrandissement artificiel d'une largeur de bande d'un signal de réception d'un terminal de communication ayant un trajet de réception du signal et un trajet d'émission du signal, comportant les stades successifs suivants :
a) on échantillonne le signal de réception dans le trajet de réception du signal,
b) on augmente la largeur de bande du signal de réception au moyen d'un algorithme d'agrandissement de la largeur de bande sur la base de valeurs d'échantillonnage obtenues au stade a) pour obtenir un signal de réception élargi,
**caractérisé par** le stade
c) on annule des échos du signal de réception élargi pour le trajet d'émission du signal au moyen d'un algorithme d'annulation d'écho en échantillonnant le signal de réception élargi.

7. Procédé suivant la revendication 6, dans lequel on effectue l'agrandissement de la largeur de bande au stade b) à une première fréquence d'échantillonnage et l'échantillonnage au stade c) à une deuxième fréquence d'échantillonnage qui est différente de la première fréquence d'échantillonnage, et on transforme un signal de réception élargi obtenu sur la base du stade b) à la deuxième fréquence d'échantillonnage avant d'effectuer le stade c).
